# EUROPÄISCHE PATENTSCHRIFT

(11) **EP 1 495 943 B1**
(45) Veröffentlichungstag und Bekanntmachung des Hinweises auf die Patenterteilung: **06.09.2006**
(21) Anmeldenummer: 04016050.9
(22) Anmeldetag: 08.07.2004
(51) Int. Cl.: B62D 5/04, B62D 5/09

(54) **Aktuator für Lenkgetriebe**
Actuator for steering gear
Actionneur pour boîtier de direction

(30) Priorität: 11.07.2003 DE 10331598
(43) Veröffentlichungstag der Anmeldung: 12.01.2005
(73) Patentinhaber: ZF Lenksysteme GmbH, 73527 Schwäbisch Gmünd (DE)
(72) Erfinder: Budaker, Martin, 73540 Heubach (DE); Hägele, Michael, 73432 Aalen (DE)

(56) Entgegenhaltungen:
- DE-A- 3 714 833
- DE-A- 10 060 832
- DE-C- 19 541 749
- US-A- 3 939 938
- US-A- 4 655 092

## Beschreibung

Die Erfindung betrifft einen Aktuator, insbesondere einen Radaktuator für ein steer-by-wire-Lenksystem eines Fahrzeugs nach dem Oberbegriff des Anspruchs 1.

Die DE 195 41 749 C1 beschreibt einen Aktuator für ein Lenksystem, bei dem die mechanische Zwangskoppelung zwischen einer Lenkhandhabe und gelenkten Rädern eines Fahrzeugs aufgehoben ist. Hierbei wird ein vorzugsweise als Elektromotor ausgebildeter Stellmotor von einer Regeleinrichtung angesteuert. Der Stellmotor dient zur Ansteuerung eines Stellventils eines Servozylinders zur Lenkverstellung gelenkter Räder und wirkt auch direkt auf ein als Zahnstangentrieb ausgebildetes Lenkgetriebe. Der Aktuator weist somit stets zwei Abtriebe auf und ist mit einem Lenkgetriebe verknüpft.

Die DE 100 60 832 A 1 beschreibt einen Aktuator einer Fremdkraftlenkung nach dem steer-by-wire-Prinzip, mit einem Elektromotor zum Antrieb eines hydraulischen Stellventils für einen Servozylinder des Aktuators. Der Elektromotor ist so dimensioniert, dass er die Stellbewegung über ein Untersetzungsgetriebe, welches den Drehmomentenstrang über das hydraulische Stellventil zu einer Bewegungsschraube darstellt, bei Ausfall des Servozylinders alleine bewältigen kann.

Der Aktuator wirkt über einen Abtrieb auf die gelenkten Räder. Sein Bauraum ist aufgrund des einstufigen Untersetzungsgetriebes nicht minimiert. Zudem eignet sich der Aktuator weniger für Lenksysteme von schweren Fahrzeugen.

Der Erfindung liegt die Aufgabe zugrunde, einen Aktuator zu schaffen, der bei minimiertem Bauraumbedarf sich für Lenksysteme schwerer PKW und Nutzkraftwagen eignet.

Die Aufgabe wird mit einem Aktuator mit den Merkmalen des Anspruchs 1 gelöst.

Dadurch, dass ein Untersetzungsgetriebe den Drehmomentenstrang zwischen dem Elektromotor und dem Abtrieb des Aktuators bildet, welches zumindest zweistufig ist, ist eine schmale Bauform des Aktuators und eine hohe Übersetzung ins Langsame zur Darstellung großer Abtriebs-Stellkräfte geschaffen.

Ein Zwischenrad des Untersetzungsgetriebes, welches bevorzugt von einem Rad oder Ritzel des Elektromotors getrieben ist, ist drehfest mit einem Drehschieber des hydraulischen Stellventils verbunden.

Bevorzugte Ausführungen der Erfindung ergeben sich aus den Unteransprüchen.

Der Drehschieber des hydraulischen Stellventils ist über ein Torsionselement, bevorzugt über einen Drehstab, mit einer Steuerbuchse des hydraulischen Stellventils rotatorisch wirkverbunden. Ein Rad an der Steuerbuchse treibt das axial unbewegliche, eine Drehbewegung in eine Translationsbewegung umformende Bauelement der Bewegungsschraube.

Das Zwischenrad des Untersetzungsgetriebes ist somit in zwei, eine weitere Übersetzungsstufe bildende Räder an dem hydraulischen Stellventil, aufgeteilt. Bevorzugt ist die Übersetzung ins Langsame von dem Elektromotor zu dem Zwischenrad hoch gewählt, um die Drehzahl und die Anzahl der Umdrehungen des Drehschiebers und der Steuerbuchse zu minimieren.

Es kann auch zweckmäßig sein, die Steuerbuchse des hydraulischen Stellventils von dem Ritzel des Elektromotors anzutreiben, wobei dann ein Rad an dem Drehschieber den weiteren Antrieb des axial unbeweglichen, eine Drehbewegung in eine Translationsbewegung umformenden Bauelementes der Bewegungsschraube übernimmt.

Um eine hohe Stellkraft des Aktuators zu bewirken oder um den Aktuator teilredundant zu gestalten, ist es zweckmäßig zwei oder mehrere Elektromotoren vorzusehen, die bevorzugt auf eine Welle und ein Abtriebsrad oder Ritzel wirken. Das axial unbewegliche, eine Drehbewegung in deine Translationsbewegung umformende Bauelement der Bewegungsschraube ist bevorzugt als Mutter eines Kugelumlaufs ausgeführt, welche eine Schubstange oder Spindel des Aktuators in beide Richtungen verschiebt. Die Schubstange bildet bevorzugt einen zweiseitigen Abtrieb des Aktuators.

Das Untersetzungsgetriebe kann als Stirnradgetriebe oder als Zugmittelgetriebe, wie etwa als Keilriemen-, Keilrippenriemen oder Zahnriemengetriebe ausgebildet sein.

Der Servozylinder kann getrennt von dem Aktuator angeordnet sein, um insbesondere seine Größe an die erforderlichen Stellkräfte dem Zweck gemäß anzupassen. Der Servozylinder kann aber auch als Einheit mit dem Aktuator gebildet sein und bevorzugt auf die Schubstange oder Spindel des Aktuators wirken.
Das Untersetzungsgetriebe ist mit seiner Gesamtübersetzung von dem Rad der Elektromotoren bis zu der Bewegungsschraube so ausgelegt, dass bei Ausfall des Servozylinders die Elektromotoren eine Funktion des Aktuators und / oder des Lenksystems des Fahrzeugs aufrecht erhalten können.

Die Erfindung wird nun näher anhand eines Ausführungsbeispiels und anhand der beiliegenden Zeichnung beschrieben.

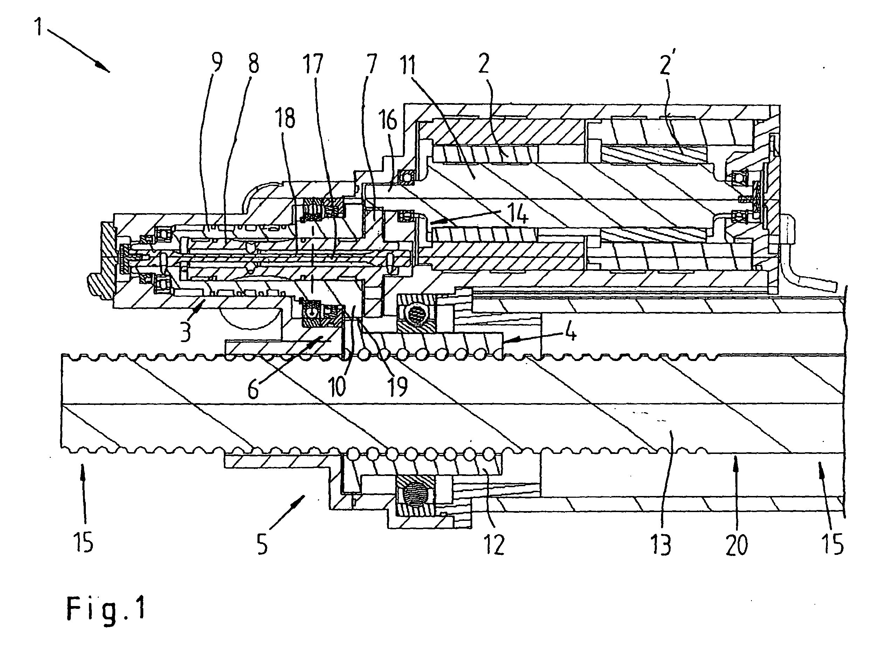

- Fig. 1: zeigt einen schematischen Längsschnitt durch einen erfindungsgemäßen Aktuator.

In der Fig. 1 ist ein als Radaktuator für ein steer-by-wire-Lenksystem eines Fahrzeugs ausgebildeter Aktuator 1 im Längsschnitt schematisch dargestellt.

Durch die Betätigung einer nicht gezeigten Lenkhandhabe des Fahrzeugs wird ein Sollwert für den gewünschten Lenkwinkel der gelenkten Räder des Fahrzeugs generiert. Eine Regel- und / oder Steuereinrichtung vergleicht den Sollwert mit einem Ist-Wert des Lenkwinkels und steuert zwei Elektromotoren 2,2' an. Die Elektromotoren 2,2' sind in Reihe angeordnet und wirken auf eine Welle 11. Die Elektromotoren 2,2' stellen u.a. ein Motormoment über ein Ritzel 16 an ein Untersetzungsgetriebe 6 bereit.

Das Untersetzungsgetriebe 6 ist zur Minimierung insbesondere der Breite des Aktuators 1 zweistufig als Stirnradgetriebe 14 mit einem Zwischenrad 7 gebildet. Das Zwischenrad 7 ist drehfest mit einem Drehschieber 8, der eine Steuerbuchse 9 durchragt, verbunden. Mit einem Drehstab 17, der im Inneren des Drehschiebers 8 in axialer Richtung verläuft, ist der Drehschieber 8 rotatorisch mit der Steuerbuchse 9 verbunden. Der Drehstab 17 ermöglicht eine Relativverdrehung des Drehschiebers 8 gegenüber der Steuerbuchse 9, wodurch durch das hydraulische Stellventil 3 eine Druckdifferenz von Druckmittel in Arbeitsräumen des nicht dargestellten Servozylinders erzeugt. Eine Stellbewegung des Servozylinders ist die Folge.

Die Steuerbuchse 9 weist ein Rad 10 an ihrem Umfang auf, dessen Längsachse 18 mit der des Zwischenrads 7, der Steuerbuchse 9 und des Drehschiebers 8 kongruent ist. Das Rad kämmt mit einer Verzahnung 19 an dem Umfang des als Kugelumlaufmutter 12 ausgebildeten Bauelementes 4 der Bewegungsschraube 5. Das axial unbeweglich gelagerte, die Drehbewegung in eine Translationsbewegung umformende Bauelement 4 der Bewegungsschraube 5 wirkt mit einer als Spindel 20 ausgebildeten Schubstange 13 zusammen und verschiebt diese in beide Richtungen axial. Die Schubstange 13 bildet einen zweiseitigen Abtrieb 15 des Aktuators 1.

Das Kugelgewinde der Kugelumlaufmutter 12 und der Spindel 20 stellt somit eine dritte Übersetzungsstufe des Aktuators 1 dar. Der Aktuator baut aufgrund der geringen radialen Abstände der Welle 11 der Elektromotoren 2,2', der Längsachse 18 und der Spindel 20 zueinander klein, obwohl ein mehrstufiges Untersetzungsgetriebe und eine hohe Stellkraft des Aktuators damit relativiert sind.

Der Servozylinder kann anstatt getrennt von dem Aktuator 1 angeordnet zu sein auch zusammen mit dem Aktuator 1 gebildet sein und bevorzugt auf die Schubstange 13 oder Spindel 20 wirken. Er ist an die erforderliche Größe der Stellkraft des Aktuators 1 anpassbar.

| BEZUGSZEICHENLISTE | | | |
|---|---|---|---|
| 1 | Aktuator | 26 | |
| 2,2' | Elektromotor | 27 | |
| 3 | Stellventil, hydraulisch | 28 | |
| 4 | Bauelement | 29 | |
| 5 | Bewegungsschraube | 30 | |
| 6 | Untersetzungsgetriebe | 31 | |
| 7 | Zwischenrad | 32 | |
| 8 | Drehschieber | 33 | |
| 9 | Steuerbuchse | 34 | |
| 10 | Rad | 35 | |
| 11 | Welle | 36 | |
| 12 | Kugelumlaufmutter | 37 | |
| 13 | Schubstange | 38 | |
| 14 | Stirnradgetriebe | 39 | |
| 15 | Abtrieb, zweiseitig | 40 | |
| 16 | Ritzel | 41 | |
| 17 | Drehstab | 42 | |
| 18 | Längsachse v. 10 | 43 | |
| 19 | Verzahnung | 44 | |
| 20 | Spindel | 45 | |
| 21 | | 46 | |
| 22 | | 47 | |
| 23 | | 48 | |
| 24 | | 49 | |
| 25 | | 50 | |
| | | | |
| | | | |
| | | | |
| | | | |
| | | | |

## Patentansprüche

1. Aktuator, insbesondere Radaktuator für ein steer-by-wire-Lenksystem eines Fahrzeugs, mit einem Elektromotor (2) zum Antrieb eines hydraulischen Stellventils (3) für einen Servozylinder des Aktuators (1) und zum Antrieb eines axial unbeweglichen, eine Drehbewegung in eine Translationsbewegung umformenden Bauelementes (4) einer Bewegungsschraube (5) des Aktuators (1), wobei ein Untersetzungsgetriebe (6) und ein Torsionselement (17) in dem Drehmomentenstrang zwischen dem Elektromotor (2), dem hydraulischen Stellventil (3) und der Bewegungsschraube (5) angeordnet ist, **dadurch gekennzeichnet, dass** das Untersetzungsgetriebe (6) zumindest zweistufig gebildet ist, wobei der Elektromotor (2) ein Zwischenrad (7) antreibt, das drehfest mit einem Drehschieber (8) des hydraulischen Stellventils (3) verbunden ist, und eine Steuerbuchse (9) des hydraulischen Stellventils (3) mit einem Rad (10) das Bauelement (4) der Bewegungsschraube (5) antreibt.

2. Aktuator, insbesondere Radaktuator für ein steer-by-wire-Lenksystem eines Fahrzeugs, mit einem Elektromotor (2) zum Antrieb eines hydraulischen Stellventils (3) für einen Servozylinder des Aktuators (1) und zum Antrieb eines axial unbeweglichen, eine Drehbewegung in eine Translationsbewegung umformenden Bauelementes (4) einer Bewegungsschraube (5) des Aktuators (1), wobei ein Untersetzungsgetriebe (6) und ein Torsionselement (17) in dem Drehmomentenstrang zwischen dem Elektromotor (2), dem hydraulischen Stellventil (3) und der Bewegungsschraube (5) angeordnet ist, **dadurch gekennzeichnet, dass** das Untersetzungsgetriebe (6) zumindest zweistufig gebildet ist, wobei der Elektromotor (2) ein Zwischenrad (7) antreibt, das drehfest mit einer Steuerbuchse (9) des hydraulischen Stellventils (3) verbunden ist, und ein Drehschieber (8) des hydraulischen Stellventils (3) mit einem Rad (10) das Bauelement (4) der Bewegungsschraube (5) antreibt.

3. Aktuator nach einem der Ansprüche 1 oder 2, **dadurch gekennzeichnet, dass** zwei oder mehrere Elektromotoren (2,2') vorgesehen sind, die auf eine gemeinsame Welle (11) wirken.

4. Aktuator nach einem der Ansprüche 1 bis 3, **dadurch gekennzeichnet, dass** das axial unbewegliche, eine Drehbewegung in eine Translationsbewegung umformende Bauelement (4) der Bewegungsschraube (5) eine Kugelumlaufmutter (12) ist, welche eine Schubstange (13) oder Spindel (20) des Aktuators (1) verschiebt.

5. Akutator nach einem der Ansprüche 1 bis 4, **dadurch gekennzeichnet, dass** das Untersetzungsgetriebe (6) als Stirnradgetriebe (14), als Keilriemen-, Keilrippenriemen-, oder Zahnriemengetriebe ausgebildet ist.

6. Aktuator nach einem der Ansprüche 1 bis 5, **dadurch gekennzeichnet, dass** der Servozylinder getrennt zu der Bewegungsschraube (5) des Aktuators (1) angeordnet ist.

7. Aktuator nach einem der Ansprüche 1 bis 6, **dadurch gekennzeichnet, dass** das Untersetzungsgetriebe (6) so übersetzt ist, dass bei Ausfall des Servozylinders der Elektromotor (2,2') eine Funktion des Aktuators (1) und / oder des Lenksystems des Fahrzeugs aufrecht erhalten kann.

8. Aktuator nach einem der Ansprüche 1 bis 7, **dadurch gekennzeichnet, dass** der Servozylinder an die Größe des Fahrzeugs angepasst ist.

9. Aktuator nach einem der Ansprüche 4 bis 8, **dadurch gekennzeichnet, dass** die Schubstange (13) einen zweiseitigen Abtrieb (15) des Aktuators (1) bildet.

10. Lenksystem mit Aktuator nach Anspruch 1, **dadurch gekennzeichnet, dass** das Untersetzungsgetriebe (6) zumindest zweistufig gebildet ist, wobei der Elektromotor (2) ein Zwischenrad (7) antreibt, das drehfest mit einem Drehschieber (8) des hydraulischen Stellventils (3) verbunden ist, und eine Steuerbuchse (9) des hydraulischen Stellventils (3) mit einem Rad (10) das Bauelement (4) der Bewegungsschraube (5) antreibt.

11. Lenksystem mit Aktuator nach Anspruch 2, **dadurch gekennzeichnet, dass** das Untersetzungsgetriebe (6) zumindest zweistufig gebildet ist, wobei der Elektromotor (2) ein Zwischenrad (7) antreibt, das drehfest mit einer Steuerbuchse (9) des hydraulischen Stellventils (3) verbunden ist, und ein Drehschieber (8) des hydraulischen Stellventils (3) mit einem Rad (10) das Bauelement (4) der Bewegungsschraube (5) antreibt.

## Claims

1. Actuator, in particular a wheel actuator for a steer-by-wire steering system of a vehicle, having an electric motor (2) for driving a hydraulic servo valve (3) for a servo cylinder of the actuator (1) and for driving an axially fixed component (4) of a screw (5) of the actuator (1) converting a rotational movement into a translational movement, a reduction gear (6) and a torsion element (17) being arranged in the torque transmission line between the electric motor (2), the hydraulic servo valve (3) and the screw (5), **characterized in that** the reduction gear (6) is formed with at least two steps, the electric motor (2) driving an intermediate gear (7), which is rotationally locked to a rotary slide valve (8) of the hydraulic servo valve (3), and a control bushing (9) of the hydraulic servo valve (3) driving the component (4) of the screw (5) by means of a gear (10).

2. Actuator, in particular a wheel actuator for a steer-by-wire steering system of a vehicle, having an electric motor (2) for driving a hydraulic servo valve (3) for a servo cylinder of the actuator (1) and for driving an axially fixed component (4) of a screw (5) of the actuator (1) converting a rotational movement into a translational movement, a reduction gear (6) and a torsion element (17) being arranged in the torque transmission line between the electric motor (2), the hydraulic servo valve (3) and the screw (5), **characterized in that** the reduction gear (6) is formed with at least two steps, the electric motor (2) driving an intermediate gear (7), which is rotationally locked to a control bushing (9) of the hydraulic servo valve (3), and a rotary slide valve (8) of the hydraulic servo valve (3) driving the component (4) of the screw (5) by means of a gear (10).

3. Actuator according to either of Claims 1 or 2, **characterized in that** two or more electric motors (2, 2') are provided, which act on a common shaft (11).

4. Actuator according to any one of Claims 1 to 3, **characterized in that** the axially fixed component (4) of the screw (5) converting a rotational movement into a translational movement is a recirculating ball nut (12), which displaces a push rod (13) or spindle (20) of the actuator (1).

5. Actuator according to any one of Claims 1 to 4, **characterized in that** the reduction gear (6) takes the form of a spur gear mechanism (14), a V-belt mechanism, a multiple ribbed belt mechanism, or a toothed belt mechanism.

6. Actuator according to any one of Claims 1 to 5, **characterized in that** servo cylinder is arranged separately from the screw (5) of the actuator (1).

7. Actuator according to any one of Claims 1 to 6, **characterized in that** reduction gear (6) is geared so that if the servo cylinder should fail the electric motor (2, 2') can maintain functioning of the actuator (1) and/or of the steering system of the vehicle.

8. Actuator according to any one of Claims 1 to 7, **characterized in that** the servo cylinder is adapted to the size of the vehicle.

9. Actuator according to any one of Claims 4 to 8, **characterized in that** push rod (13) forms a bilateral output (15) of the actuator (1).

10. Steering system having an actuator according to Claim 1, **characterized in that** the reduction gear (6) is formed with at least two steps, the electric motor (2) driving an intermediate gear (7), which is rotationally locked to a rotary slide valve (8) of the hydraulic servo valve (3), and a control bushing (9) of the hydraulic servo valve (3) driving the component (4) of the screw (5) by means of a gear (10).

11. Steering system having an actuator according to Claim 2, **characterized in that** the reduction gear (6) is formed with at least two steps, the electric motor (2) driving an intermediate gear (7), which is rotationally locked to a control bushing (9) of the hydraulic servo valve (3), and a rotary slide valve (8) of the hydraulic servo valve (3) driving the component (4) of the screw (5) by means of a gear (10).

## Revendications

1. Actionneur, notamment actionneur de pignon pour un système de direction à commande par câble d'un véhicule, comprenant un moteur électrique (2) pour entraîner une vanne pilote hydraulique (3) pour un vérin asservi de l'actionneur (1) et pour entraîner un composant (4) d'une vis d'avance (5) de l'actionneur (1) immobile dans le sens axial et transformant un mouvement de rotation en un mouvement de translation, un engrenage réducteur (6) et un élément de torsion (17) étant disposés dans la chaîne de transmission de couple entre le moteur électrique (2), la vanne pilote hydraulique (3) et la vis d'avance (5), **caractérisé en ce que** l'engrenage réducteur (6) est réalisé avec au moins deux étages, le moteur électrique (2) entraînant un pignon intermédiaire (7) qui est relié avec blocage de la torsion à un tiroir rotatif (8) de la vanne pilote hydraulique (3), et une douille de commande (9) de la vanne pilote hydraulique (3) entraînant avec un pignon (10) le composant (4) de la vis d'avance (5).

2. Actionneur, notamment actionneur de pignon pour un système de direction à commande par câble d'un véhicule, comprenant un moteur électrique (2) pour entraîner une vanne pilote hydraulique (3) pour un vérin asservi de l'actionneur (1) et pour entraîner un composant (4) d'une vis d'avance (5) de l'actionneur (1) immobile dans le sens axial et transformant un mouvement de rotation en un mouvement de translation, un engrenage réducteur (6) et un élément de torsion (17) étant disposés dans la chaîne de transmission de couple entre le moteur électrique (2), la vanne pilote hydraulique (3) et la vis d'avance (5), **caractérisé en ce que** l'engrenage réducteur (6) est réalisé avec au moins deux étages, le moteur électrique (2) entraînant un pignon intermédiaire (7) qui est relié avec blocage de la torsion à une douille de commande (9) de la vanne pilote hydraulique (3), et un tiroir rotatif (8) de la vanne pilote hydraulique (3) entraînant avec un pignon (10) le composant (4) de la vis d'avance (5).

3. Actionneur selon l'une des revendications 1 ou 2, **caractérisé en ce que** sont prévus deux moteurs électriques (2, 2') ou plus qui agissent sur un arbre commun (11).

4. Actionneur selon l'une des revendications 1 à 3, **caractérisé en ce que** le composant (4) de la vis d'avance (5) immobile dans le sens axial et transformant un mouvement de rotation en un mouvement de translation est un écrou à circulation de billes (12) qui fait coulisser une bielle (13) ou une broche (20) de l'actionneur (1).

5. Actionneur selon l'une des revendications 1 à 4, **caractérisé en ce que** l'engrenage réducteur (6) est réalisé sous la forme d'un engrenage à pignon droit (14), d'un engrenage à courroie trapézoïdale, à courroie trapézoïdale à nervures ou à courroie crantée.

6. Actionneur selon l'une des revendications 1 à 5, **caractérisé en ce que** le vérin asservi est disposé séparément de la vis d'avance (5) de l'actionneur (1).

7. Actionneur selon l'une des revendications 1 à 6, **caractérisé en ce que** l'engrenage réducteur (6) est démultiplié de telle sorte qu'en cas de panne du vérin asservi, le moteur électrique (2, 2') peut maintenir un fonctionnement de l'actionneur (1) et/ou du système de direction du véhicule.

8. Actionneur selon l'une des revendications 1 à 7, **caractérisé en ce que** le vérin asservi est adapté à la taille du véhicule.

9. Actionneur selon l'une des revendications 4 à 8, **caractérisé en ce que** la bielle (13) forme une sortie bilatérale (15) de l'actionneur (1).

10. Système de direction comprenant un actionneur selon la revendication 1, **caractérisé en ce que** l'engrenage réducteur (6) est réalisé avec au moins deux étages, le moteur électrique (2) entraînant un pignon intermédiaire (7) qui est relié avec blocage de la torsion à un tiroir rotatif (8) de la vanne pilote hydraulique (3), et une douille de commande (9) de la vanne pilote hydraulique (3) entraînant avec un pignon (10) le composant (4) de la vis d'avance (5).

11. Système de direction comprenant un actionneur selon la revendication 2, **caractérisé en ce que** l'engrenage réducteur (6) est réalisé avec au moins deux étages, le moteur électrique (2) entraînant un pignon intermédiaire (7) qui est relié avec blocage de la torsion à une douille de commande (9) de la vanne pilote hydraulique (3), et un tiroir rotatif (8) de la vanne pilote hydraulique (3) entraînant avec un pignon (10) le composant (4) de la vis d'avance (5).
